# EUROPEAN PATENT APPLICATION

(11) **EP 1 048 548 A2**
(43) Date of publication of application: **02.11.2000**
(21) Application number: 00108071.2
(22) Date of filing: 25.04.2000
(51) Int. Cl.: B62D 5/065

(54) **Feeding device of the hydraulic unit for power assisted steering of a vehicle**

(30) Priority: 29.04.1999 IT VI990082
(71) Applicant: SME Elettronica S.p.A., 36071 Arzignano (VI) (IT)
(72) Inventor: Pace, Adolfo, 36071 Arzignano (VI) (IT)
(74) Representative: Bonini, Ercole

(57) **Abstract**

A feeding device (1) of the hydraulic unit (8) for power assisted steering (S) of a vehicle that comprises: a pump (2) driven by an electric motor (3) connected by an electric converter (4) to an electric accumulator battery (5); a tank (6) containing hydraulic oil; a suction pipe (9) that connects the tank (6) to the suction inlet (2a) of the pump (2); a delivery pipe (10) that connects the delivery outlet (2m) of the pump (2) to the inlet (8i) of the hydraulic power unit (8); a return pipe (11) that connects the outlet (8u) of the hydraulic power unit (8) to the tank (6). The device (1) comprises a cut-off valve (14) on the delivery pipe (10), downline to the cut-off valve (14) and upline to the hydraulic power unit (8) being mounted a pressure sensor (15) and a tank (16) to store oil under pressure.

## Description

The invention concerns a feeding device of the hydraulic unit for power assisted steering, commonly simply called the "power steering", of a vehicle.

It is known that vehicles, above all the larger makes and models, such as for example, large capacity automobiles, articulated lorries and vehicles assigned to transporting goods, are applied with special hydraulic devices for power assisted steering that makes it easier to direct the vehicle.

In particular, power assisted steering devices, which are generally named "power steering", are applied to electric forklift trucks that by their nature are assigned to transporting heavy goods and often find the need to have to direct their wheels while standing still.

According to known productions, the power steering is basically a hydraulic header connected to the vehicle's steering wheel that, depending on the direction the steering wheel is directed, sends oil put under pressure by a pump to hydraulic actuators acting on the steering linkage.

While driving the vehicle the steering action on the wheels that is performed by the driver by directing the steering wheel, is integrated by the hydraulic drive of the jacks so that steering becomes less strenuous.

According to some known productions, the hydraulic pump that puts under pressure the oil that powers the power steering is the same pump that puts under pressure the oil in the primary circuit operating the load handling jacks.

These productions have an inconvenience in that their pump and motor are greatly oversized for the auxiliary function they have to perform of steering the wheels.

What's more, considering that pump and motor must always be running to ensure a constant operation of the power steering even when the forklift is not assigned to handling a load, it is understandable that this leads to a substantial increase in consumption and consequently a considerable reduction in the autonomy of charge for the forklift's accumulator battery.

To overcome these inconveniences, solutions have been produced where the vehicle has a switch that is actuated by turning the steering wheel, and starts the pump that operates the power steering only when the vehicle is being directed.

This achieves the advantage of reducing consumption but also has the disadvantage of stiffening the turning of the steering wheel when starting to change direction, because of the delayed start-up of the pump that powers the power steering.

Alternatively, there are known productions where the power steering is powered by a pump that is specifically sized and drives an auxiliary electric motor, also connected to the forklift's accumulator battery.

This kind of solution, even though it has the advantage of reducing consumption and increasing the vehicle's autonomy, since the pump and actuating motor are smaller in size, it however has the inconvenience of requiring the installation of a independent hydraulic unit complete with pump motor and converter, with a consequent increase in the vehicle's production costs.

The installation of a complete independent hydraulic unit also has the added inconvenience of increasing overall noise levels of the forklift while it is running, this noise level being primarily due to the existence of two pumps and two motors.

This invention intends to overcome said inconveniences.

In particular, a scope of the invention is to produce a feeding device of the hydraulic unit for power assisted steering of a vehicle, especially an electrically actuated hydraulic forklift truck, that operates even when the electric motor and the pump that powers the hydraulic circuit are shutdown.

Another scope is that the device invention has lower noise levels than equivalent devices belonging to known technology.

Last but not least, a scope is that the device invention also allows a reduction in energy consumption.

Said scopes are achieved through the production of a feeding device of the hydraulic unit for power assisted steering of a vehicle, said vehicle, in accordance with the main claim, comprising:
- at least one pump driven by an electric motor connected by an electric converter to an electric accumulator battery;
- at least one tank containing hydraulic oil;
- at least one suction pipe that connects said tank to the suction inlet of said at least one pump;
- at least one delivery pipe that connects the delivery outlet of said pump to the inlet of said hydraulic power unit;
- at least one return pipe that connects the outlet of said hydraulic power unit to said tank, and is characterised in that it comprises at least one cut-off valve of said at least one delivery pipe, downline to said cut-off valve and upline to said hydraulic power unit being mounted at least one pressure sensor and at least one pressurised oil storage tank.

According to a preferred form of execution the cut-off valve comprises a two way/two stage header of the instable, normally closed type actuated by solenoid, mounted in series to the delivery pipe immediately downline to the point where the communication pipe forks off to feed all the vehicle's other hydraulic equipment.

The storage tank is connected in parallel to the delivery pipe downline to the cut-off valve and in a similar way the pressure sensor is also connected in parallel to the delivery pipe, at a point between the cut-off valve and the storage tank.

An advantage of the feeding device under this invention is that it allows to obtain a substantial saving and a consequent lower consumption of the battery that also leads to a corresponding increase in the vehicle's autonomy.

Said scopes and advantages will be better explained during the description of a preferred form of execution of the invention that is given as a guideline but not a limitation and refers to the attached diagrams, where:
- fig. 1 illustrates a circuit diagram of the device invention;
- fig. 2 illustrates a circuit diagram of the device invention illustrated in fig. 1 in a different working position.

The device under this invention is described below in a preferred form of execution that prescribes its application to an electrically driven vehicle, especially a forklift truck.

However it is clear that the device may be applied to any other kind of vehicle whatsoever.

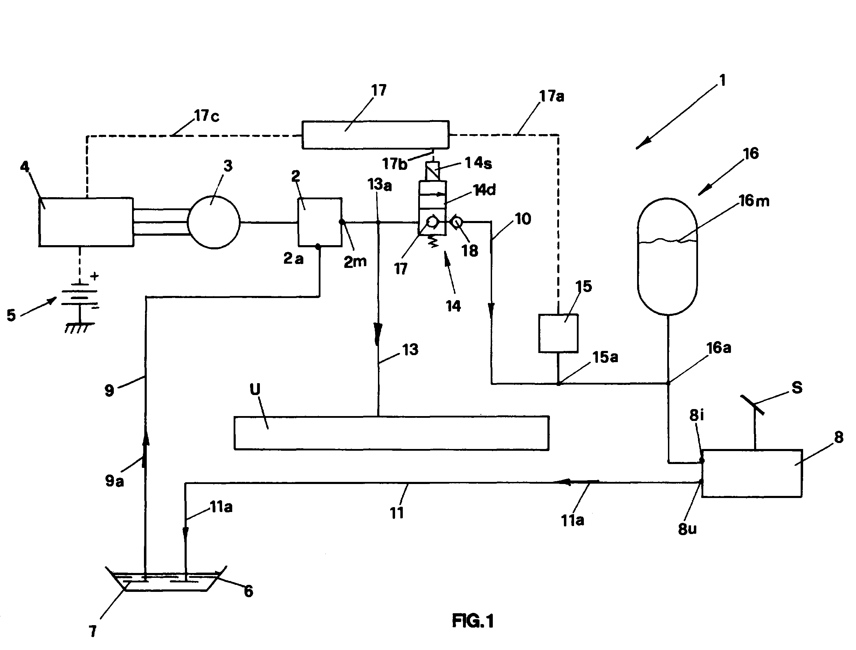

The device invention is illustrated in fig. 1, where it is generally indicated by 1.

It is applied to a forklift truck that essentially comprises a pump 2 that is driven by an electric motor 3 connected by an electric converter 4 to an electric accumulator battery 5, and a tank 6 that contains hydraulic oil 7 to feed the forklift's equipment. This includes the hydraulic power assisted steering unit generally indicated by 8, commonly called "power steering".

A suction pipe 9 connects the suction inlet 2a of pump 2 to the tank 6 while the delivery outlet 2m of the actual pump 2 is connected to a delivery pipe 10 that feeds the aforementioned hydraulic power unit 8, through inlet 8i.

The outlet 8u of the power steering 8 is then connected to a return pipe 11 that feeds into the tank 6.

The feeding device, according to this invention, comprises a cut-off valve 14 of said at least one delivery pipe 10, downline to said cut-off valve 14 and upline to said hydraulic power unit 8 being mounted a pressure sensor 15 and a tank 16 to store pressurised oil.

With regards to the cut-off valve 14, it can be seen that it comprises a two way/two stage header 14d of the instable, normally closed type, mounted in series to the delivery pipe 10, provided with solenoid actuator 14s and retractile spring 14m.

The header 14 is connected to the delivery pipe 10 downline to the pump's delivery outlet 2m and also downline to the junction point 13a where the delivery pipe 10 is connected to the communication pipe 13 that feeds the vehicle's other hydraulic equipment U such as for example the load lifting jacks, the brakes and others.

The tank 16, as can be seen, is connected in parallel to the delivery pipe 10 at point 16a, and the pressure sensor 15 is also connected to the delivery pipe 10, at point 15a of the section between the cut-off valve 14 and the tank 16.

It can finally be seen that a control device 17, preferably consisting of an electric/electronic control unit, that manages the vehicle's operation according to the controls given by the driver, is electrically wired by a first electric line 17a to the pressure sensor 15, by a second electric line 17b to the solenoid 14s of the cut-off valve 14 and by a third electric line 17c to the electric converter 4.

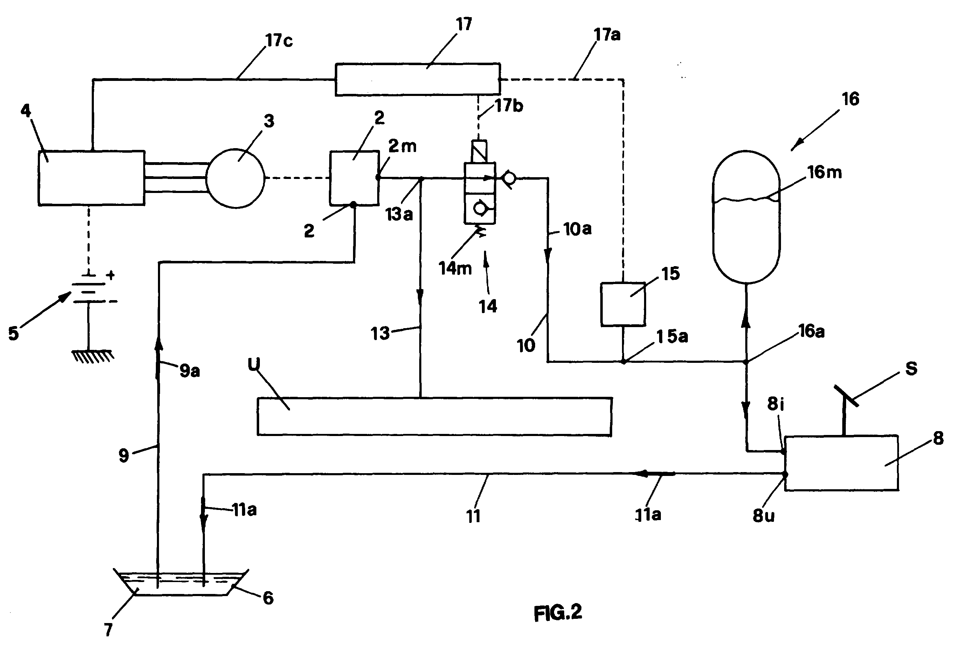

In practice when the electric motor 3 drives the pump 2, this sucks oil 7 from the tank 6 through the suction pipe 9 in the direction indicated by arrow 9a and if the header 14 is set to open, as can be seen in fig. 2, oil flows along the delivery pipe 10 in the direction indicated by the arrow 10a and enters the power steering 7 that assists directing the steering linkage in the direction that is given by turning the steering wheel S.

The oil returns from the power steering 7 to the tank 6 along the return pipe 11 in the direction indicated by the arrow 11a.

The oil under pressure flowing along the delivery pipe 10a, also enters the storage tank 16 that is preferably a pressurised tank containing a diaphragm 16m precharged at a pressure, preferably but not necessarily, of 40 bar.

When the pressure inside the tank 16 reaches a value, preferably but not necessarily, of 150 bar, the pressure sensor 15, duly calibrated at this pressure level, sends an electric signal to the control unit 17 through the first electric line 17a that cuts off the electrical supply to the solenoid 14s through the second electric line 17b.

The cut-off valve 14, by action of the spring 14m, is spontaneously set its normally closed position as illustrated in fig. 1.

Under these conditions even if the motor 3 is stopped, the power steering 7 is nevertheless fed by the oil under pressure contained in tank 16 and therefore the driver can steer the vehicle all the same aided by the action of the power steering 7.

When the vehicle is restarted, the pump 2 does not feed the tank 16 until its inside pressure has not fallen below a pre-set minimum value, preferably but not necessarily, of 60 bar.

On reaching this pressure, the pressure sensor 15 trips again to restore the electrical supply to the solenoid 14s so that the header 14 is set back to the configuration illustrated in fig. 2.

Under these conditions the storage tank 16 is recharged until the aforesaid maximum pressure of 150 bar is restored, when the header 14 returns to its closed position illustrated in fig. 1.

During the opening and closing actions of the header 14d, special check valves 17 and 18 mounted in the header 14d and on the delivery pipe 10 respectively, prevent a backflow of the hydraulic oil.

Even while the storage tank 16 is being filled and refilled the operator can continue to direct the vehicle.

The fact that the power steering's operation is primarily based on the pressurised oil supplied by the storage tank 16 and therefore available even when the electric motor 3 and pump 2 are shutdown, this gives rise to a substantial saving in energy absorbed from the accumulator battery.

In particular the electric converter 4 used is a torque control inverter.

Practical tests have enabled an estimate of this energy saving to approximately 5% for each battery charge cycle.

As a consequence a corresponding increase is obtained in the autonomy of charge of the accumulator battery and therefore of the vehicle.

From the above description it is clear that the feeding device invention achieves all the set scopes.

In the execution of the device invention changes or variants in construction may be made all falling under the claims given below and therefore protected by this patent.

## Claims

1. Feeding device of the hydraulic unit for power assisted steering of a vehicle, said vehicle comprising:
- at least one pump driven by an electric motor connected by an electric converter to an electric accumulator battery;
- at least one tank containing hydraulic oil;
- at least one suction pipe that connects said tank to the suction inlet of said at least one pump;
- at least one delivery pipe that connects the delivery outlet of said pump to the inlet of said hydraulic power unit;
- at least one return pipe that connects the outlet of said hydraulic power unit to said tank,
**characterised in that** it comprises at least one cut-off valve (14) on said at least one delivery pipe (10), downline to said cut-off valve (14) and upline to said hydraulic power unit (8) being mounted at least one pressure sensor (15) and at least one tank (16) to store oil under pressure.

2. Device (1) according to claim 1) **characterised in that** said cut-off valve (14) comprises a two way/two stage header (14d) of the instable and normally closed type with solenoid actuator (14s), mounted in series to said delivery pipe (10).

3. Device (1) according to claim 2) **characterised in that** said solenoid (14s) of said cut-off valve (14), said pressure sensor (15) and said electric converter (4) are electrically wired by electric lines (17a, 17b, 17c) to an electric/electronic control device (17).

4. Device (1) according to claim 1) **characterised in that** said storage tank (16) is connected in parallel to said delivery pipe (10).

5. Device (1) according to claim 1) or 4) **characterised in that** said storage tank (16) is a pressurised tank having an internal diaphragm (16m) precharged with fluid under pressure.

6. Device (1) according to claim 1) **characterised in that** said pressure sensor (15) is connected in parallel to said delivery pipe (10).

7. Device (1) according to claim 6) **characterised in that** said pressure sensor (15) is mounted downline to said cut-off valve (14) and upline to said storage tank (16).

8. Device (1) according to claim 2) **characterised in that** said delivery pipe (10) has a communication pipe (13) connected upline to said cut-off valve (14).

9. Device (1) according to claim 1) **characterised in that** said electric converter (4) is a torque control inverter.
